# EUROPEAN PATENT APPLICATION

(11) **EP 4 170 784 A1**
(43) Date of publication of application: **26.04.2023**
(21) Application number: 21826174.1
(22) Date of filing: 06.01.2021
(51) Int. Cl.: H01M 50/153, H01M 50/147, H01M 50/169, H01M 50/528, H01M 50/172, H01M 50/543, H01M 10/04

(54) **RECHARGEABLE BATTERY**

(30) Priority: 18.06.2020 KR 20200074397
(71) Applicant: Samsung SDI Co., Ltd., Yongin-si, Gyeonggi-do 17084 (KR)
(72) Inventor: KO, Heejung, Yongin-si, Gyeonggi-do 17084 (KR); KIM, Kijung, Yongin-si, Gyeonggi-do 17084 (KR); PARK, Yongjin, Yongin-si, Gyeonggi-do 17084 (KR); WOO, Byongchul, Yongin-si, Gyeonggi-do 17084 (KR); LEE, Jong-Ha, Yongin-si, Gyeonggi-do 17084 (KR)
(74) Representative: Gulde & Partner
(86) International application number: PCT/KR2021/000134
(87) International publication number: WO 2021/256648

(57) **Abstract**

A rechargeable battery includes: an electrode assembly including a first electrode, a second electrode, a separator located between the first electrode and the second electrode, a first electrode tab extended from the first electrode, and a second electrode tab extended from the second electrode; a case connected to the first electrode tab to accommodate the electrode assembly, and including an opening portion to expose the electrode assembly; a cap plate coupled with the case to cover an outer peripheral region of the opening portion and including a through-hole to expose a center region of the opening portion; and a terminal plate connected to the second electrode tab to be insulation-bonded to the cap plate, and including a flange part covering the through-hole and a protruding part passing through the through-hole from a center portion of the flange part.

## Description

### [Technical Field]

The present disclosure relates to a rechargeable battery.

### [Background Art]

In general, a rechargeable battery is a chargeable and dischargeable battery.

Recently, as the demand for wearable devices, such as headphones, earphones, smart watches, and body-attached medical devices, using wireless communication, such as Bluetooth, increases, the need for the ultra-small rechargeable battery mounted on the wearable device is increasing.

In the ultra-small rechargeable battery, electrode tabs connected to both electrodes of an electrode assembly located inside the rechargeable battery are coupled to electrode terminals exposed to the outside.

The above information disclosed in this Background section is only for enhancement of understanding of the background of the invention, and therefore it may contain information that does not form the prior art that is already known in this country to a person of ordinary skill in the art.

### [Disclosure]

### [Technical Problem]

An exemplary embodiment provides a rechargeable battery in which bending of an electrode tab coupled to an electrode terminal is suppressed.

Another exemplary embodiment provides a rechargeable battery in which an electrode terminal and an electrode tab are welded by using ultrasonic waves.

Another exemplary embodiment provides a rechargeable battery in which a short circuit between the electrode terminals is prevented.

### [Technical Solution]

One aspect provides a rechargeable battery including: an electrode assembly including a first electrode, a second electrode, a separator located between the first electrode and the second electrode, a first electrode tab extended from the first electrode, and a second electrode tab extended from the second electrode; a case connected to the first electrode tab to accommodate the electrode assembly, and including an opening portion to expose the electrode assembly; a cap plate coupled with the case to cover an outer peripheral region of an opening portion and including a through-hole to expose a center region of the opening portion; and a terminal plate connected to the second electrode tab to be insulation-bonded to the cap plate, and including a flange part covering the through-hole and a protruding part passing through the through-hole from a center portion of the flange part, in which the second electrode tab is coupled with a peripheral portion of the flange part.

The second electrode tab may not overlap the protruding part.

The second electrode tab may be extended from a border of an upper portion of the electrode assembly to the flange part.

The flange part may be located between the cap plate and the electrode assembly.

The protruding part may pass through the through-hole and be exposed to the outside.

The flange part may have a wider area than an area of the protruding part.

A thickness of the flange part may be smaller than a thickness of the protruding part.

The second electrode tab may be welded to the flange part by ultrasonic welding.

The rechargeable battery may further include a thermal fusion layer located between the cap plate and the flange part and configured to insulation-bond the cap plate and the flange part.

The second electrode tab may overlap the thermal fusion layer.

The case and the cap plate may have the same polarity as a polarity of the first electrode, and the terminal plate may have the same polarity as a polarity of the second electrode.

The first electrode tab may be coupled to a bottom portion of the case.

The first electrode tab may be extended from a border of a lower portion of the electrode assembly to a bottom portion of the case.

### [Advantageous Effects]

According to the exemplary embodiment, there is provided the rechargeable battery in which bending of an electrode tab coupled to an electrode terminal is suppressed.

Further, according to the exemplary embodiment, there is provided the rechargeable battery in which an electrode terminal and an electrode tab are welded by using ultrasonic waves.

Furthermore, according to the exemplary embodiment, there is provided the rechargeable battery in which a short circuit between the electrode terminals is prevented.

### [Description of the Drawings]

FIG. 1 is a perspective view illustrating a rechargeable battery according to an exemplary embodiment.
FIG. 2 is a cross-sectional view along II-II of FIG. 1.
FIG. 3 is a cross-sectional view illustrating coupling of a cap plate to which a terminal plate of the rechargeable battery is bonded to a case according to the exemplary embodiment.

### [Mode for Invention]

The present invention will be described more fully hereinafter with reference to the accompanying drawings, in which exemplary embodiments of the invention are shown. As those skilled in the art would realize, the described embodiments may be modified in various different ways, all without departing from the scope of the present invention.

In addition, unless explicitly described to the contrary, the word "comprise", and variations such as "comprises" or "comprising", will be understood to imply the inclusion of stated elements but not the exclusion of any other elements.

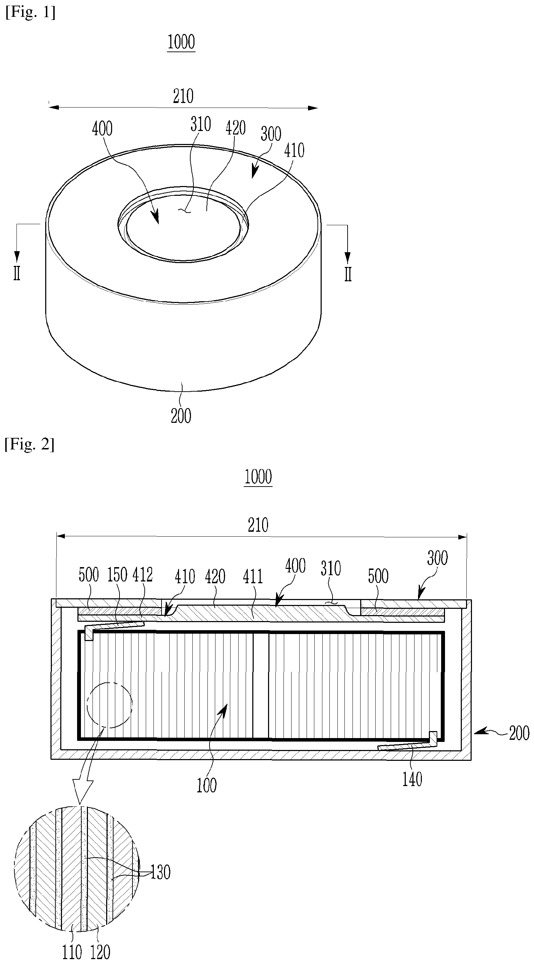

Hereinafter, a rechargeable battery according to an exemplary embodiment will be described with reference to FIGS. 1 to 3.

A rechargeable battery according to an exemplary embodiment is an ultra-small rechargeable battery, and may be a coin cell or button cell, but is not limited thereto, and the rechargeable battery may be a cylindrical or pin-shaped battery.

Herein, the coin cell or button cell is a thin coin or button-shaped battery, and may mean a battery in which the ratio of height to diameter (height/diameter) is 1 or less, but is not limited thereto. Since the coin cell or button cell mainly has a cylindrical shape, the cross-section in the horizontal direction is circular, but is not limited thereto, and shapes having an oval or polygonal cross-section in the horizontal direction may also be included therein. In this case, the diameter may mean the maximum distance based on the horizontal direction of the battery, and the height may mean the maximum distance (the distance from the flat bottom surface to the flat topmost surface) based on the vertical direction of the battery.

FIG. 1 is a perspective view illustrating a rechargeable battery according to an exemplary embodiment. FIG. 2 is a cross-sectional view along II-II of FIG. 1.

Referring to FIGS. 1 and 2, a rechargeable battery 1000 according to an exemplary embodiment includes an electrode assembly 100, a case 200, a cap plate 300, a terminal plate 400, and a thermal fusion layer 500.

The electrode assembly 100 is accommodated in the case 200. A lower portion of the electrode assembly 100 faces a bottom portion of the case 200, and an upper portion of the electrode assembly 100 faces a cap plate 300 covering an opening portion 210 of the case 200 and a flange part 410 of a terminal plate 400. The upper portion and the lower portion of the electrode assembly 100 may have planar forms parallel to each other, but are not limited thereto.

The electrode assembly 100 includes a first electrode 110, a second electrode 120, a separator 130, a first electrode tab 140, and a second electrode tab 150.

The first electrode 110 and the second electrode 120 are spaced apart from each other, and the separator 130 including an insulating material is located between the first electrode 110 and the second electrode 120. The first electrode 110 may be an anode and the second electrode 120 may be a cathode, but the present disclosure is not limited thereto, and the first electrode 110 may be a cathode and the second electrode 120 may be an anode.

The first electrode 110 has a band shape extended in one direction, and includes a negative electrode coated portion that is a region in which a negative electrode active material layer is applied to a current collector of a metal foil (for example, Cu foil) and a negative electrode uncoated portion that is a region in which an active material is not applied. The negative electrode uncoated portion may be located at one end in the direction in which the first electrode 110 is extended.

The second electrode 120 is spaced apart from the first electrode 110 with the separator 130 interposed therebetween to have a band shape extended in one direction, and includes a positive electrode coated portion that is a region in which a positive electrode active material layer is applied to a current collector of a metal foil (for example, Al foil) and a positive electrode uncoated portion that is a region in which an active material is not applied. The positive electrode uncoated portion may be located at one end in the direction in which the second electrode 120 is extended.

The separator 130 is extended in one direction between the first electrode 110 and the second electrode 120 to prevent a short-circuit between the first electrode 110 and the second electrode 120.

The first electrode 110, the separator 130, and the second electrode 120 are sequentially stacked to be wound in the form of a jelly roll, but the present invention is not limited thereto, and the first electrode 110, the separator 130, and the second electrode 120 may be formed in various publicly-known forms. Each of the first electrode 110, the second electrode 120, and the separator 130 may include various publicly-known materials.

A first electrode tab 140 is extended from the first electrode 110 of the electrode assembly 100 to the case 200. The first electrode tab 140 is extended from a border of the lower portion of the electrode assembly 100 to the bottom portion of the case 200 and is coupled to the bottom portion of the case 200. The first electrode tab 140 is coupled to a peripheral portion of the bottom portion of the case 200, but is not limited thereto, and the first electrode tab 140 may be coupled to the center portion of the bottom portion of the case 200. The first electrode tab 140 connects the first electrode 110 and the case 200. The first electrode tab 140 is in contact with the first electrode 110 and the case 200. The case 200 has the same polarity as that of the first electrode 110 by the first electrode tab 140.

The second electrode tab 150 is extended to the terminal plate 400 from the second electrode 120 of the electrode assembly 100. The second electrode tab 150 is extended from a border of the upper portion of the electrode assembly 100 to the flange part 410 of the terminal plate 400 to be coupled to a peripheral portion 412 of the flange part 410. The second electrode tab 150 is coupled with the flange part 410 of the terminal plate 400 to connect the second electrode 120 and the terminal plate 400. The second electrode tab 150 is in contact with the second electrode 120 and the flange part 410 of the terminal plate 400. The second electrode tab 150 is coupled with the peripheral portion 412 of the flange part 410 of the terminal plate 400, so that the second electrode tab 150 does not overlap a protruding part 420 of the terminal plate 400 in the vertical direction. The second electrode tab 150 is coupled with the peripheral portion 412 of the flange part 410 of the terminal plate 400, so that the second electrode tab 150 overlaps the thermal fusion layer 500 in the vertical direction. The terminal plate 400 has the same polarity as that of the second electrode 120 by the second electrode tab 150.

The case 200 is connected with the first electrode tab 140 of the electrode assembly 100 to accommodate the electrode assembly 100. The case 200 includes the opening portion 210 for exposing the upper portion of the electrode assembly 100. The bottom portion of the case 200 is coupled with the first electrode tab 140 to be connected with the first electrode 110 of the electrode assembly 100. The case 200 has the same polarity as that of the first electrode 110. The case 200 has a cylindrical shape accommodating the electrode assembly 100 in the form of the jelly roll, but is not limited thereto and may have various publicly-known forms. The case 200 may accommodate various publicly-known electrolytes together with the electrode assembly 100. The case 200 includes stainless steel, but is not limited thereto, and may include a metal, such as aluminum, nickel, and copper. An external surface of the case 200 may be a first electrode terminal of the rechargeable battery 1000, but is not limited thereto. In this case, the external surface of the protruding part 420 that is the external surface of the terminal plate 400 may be a second electrode terminal of the rechargeable battery 1000, but is not limited thereto. In the meantime, the external surface of the case 200 may be coated with a plating layer, but is not limited thereto and various publicly-known coating layers may be coated on the external surface of the case 200.

The opening portion 210 of the case 200 is covered by the cap plate 300 and the terminal plate 400.

The cap plate 300 is coupled with the case 200 and covers an outer peripheral region of the opening 210. The cap plate 300 includes a through-hole 310 exposing a center region of the opening portion 210. The cap plate 300 is directly coupled to a lateral wall of the case 200 forming the opening portion 210 of the case 200 by a welding process and the like to cover the outer peripheral region of the opening portion 210. The cap plate 300 has a ring shape by the through-hole 310 formed at the center, but is not limited thereto. The cap plate 300 is coupled with the case 200 and has the same polarity as that of the first electrode 110. The cap plate 300 includes stainless steel, but is not limited thereto, and may include a metal, such as aluminum, nickel, and copper. An external surface of the cap plate 300 may be the first electrode terminal of the rechargeable battery 1000, but is not limited thereto.

In the meantime, the external surface of the cap plate 300 may be coated with a plating layer, but is not limited thereto and various publicly-known coating layers may be coated on the external surface of the cap plate 300.

The terminal plate 400 is connected with the second electrode tab 150 and is insulation-bonded to the cap plate 300. The terminal plate 400 covers the through-hole 310 of the cap plate 300. The terminal plate 400 is located between the cap plate 300 and the electrode assembly 100. The terminal plate 400 covers the center region of the opening portion 210 of the case 200 exposed through the through-hole 310 of the cap plate 300. The terminal plate 400 covers the center region of the opening portion 210 and the cap plate 300 covers the outer peripheral region of the opening portion 210, so that the opening portion 210 of the case 200 is completely covered by the terminal plate 400 and the cap plate 300. The terminal plate 400 is connected with the second electrode tab 150 of the electrode assembly 100 and is connected with the second electrode 120 of the electrode assembly 100. The terminal plate 400 has the same polarity as that of the second electrode 120. The terminal plate 400 includes forged aluminum, but is not limited thereto, and may include metals, such as stainless steel, nickel, and copper that have been forged or drawn.

The terminal plate 400 includes the flange part 410 and the protruding part 420.

The flange part 410 is located between the cap plate 300 and the electrode assembly 100, and overlaps the cap plate 300 in the vertical direction to cover the through-hole 310. The flange part 410 has a larger area than that of the protruding part 420. For example, the flange part 410 may have a larger diameter than that of the protruding part 420. The flange part 410 has a smaller thickness than that of the protruding part 420. An upper surface of the flange part 410 is in contact with the thermal fusion layer 500, and the flange part 410 is insulation-bonded to the cap plate 300 by the thermal fusion layer 500. The flange part 410 is coupled with the second electrode tab 150. Since the thickness of the flange part 410 is smaller than that of the protruding part 420, a space between the flange part 410 and the second electrode tab 150 may be ultrasonic-welded, but the present disclosure is not limited thereto. The flange part 410 includes a center portion 411 from which the protruding part 420 protrudes, and a peripheral portion 412 surrounding the center portion 411. A lower surface of the peripheral portion 412 of the flange part 410 is coupled with the second electrode tab 150. The flange part 410 is coupled with the second electrode tab 150, so that the protruding part 420 and the flange part 410 of the terminal plate 400 have the same polarity as that of the second electrode 120.

The protruding part 420 protrudes from the upper surface of the center portion 411 of the flange part 410 to pass through the through-hole 310. The protruding part 420 passes through the through-hole 310 from the flange part 410 to be exposed to the outside. The external surface of the protruding part 420 may be the second electrode terminal of the rechargeable battery 1000. A height of the external surface of the protruding part 420 is smaller than that of the external surface of the cap plate 300. In the meantime, the external surface of the protruding part 420 may be located on the same plane as or different planes from that of the external surface of the cap plate 300. For example, the height of the external surface of the protruding part 420 may be the same as the height of the external surface of the cap plate 300, but the present disclosure is not limited thereto, and the height of the external surface of the protruding part 420 may be larger or smaller than the height of the external surface of the cap plate 300. The protruding part 420 may be the second electrode terminal of the rechargeable battery 1000, but is not limited thereto. The protruding part 420 and the flange part 410 are integrally formed, but the present disclosure is not limited thereto, and different materials may be combined to form the terminal plate 400.

The thermal fusion layer 500 is located between the cap plate 300 and the flange part 410 of the terminal plate 400, and insulation-bonds the space between the cap plate 300 and the flange part 410 of the terminal plate 400. The thermal fusion layer 50 includes an insulating material, and insulates the space between the cap plate 300 and the terminal plate 400. The thermal fusion layer 500 is thermally fused between the cap plate 300 and the flange part 410 of the terminal plate 400 by using heat or a laser beam. The thermal fusion layer 500 may include various publicly-known materials which insulation-bond the space between the cap plate 300 and the terminal plate 400. The thermal fusion layer 500 bonds the space between the cap plate 300 and the 40, so that the opening portion 210 of the case 200 in which the electrode assembly 100 is accommodated is completely sealed by the cap plate 300, the terminal plate 400, and the thermal fusion layer 500.

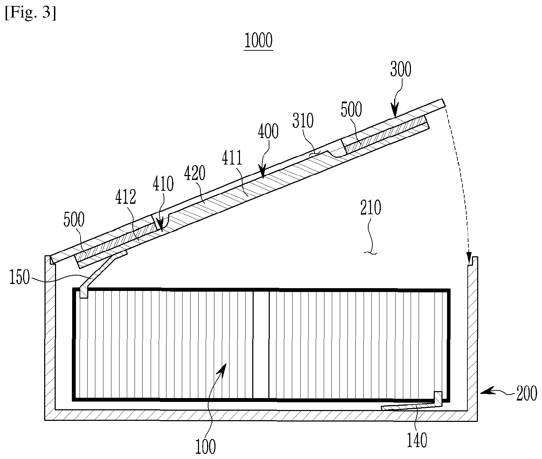

FIG. 3 is a cross-sectional view illustrating coupling of a cap plate to which a terminal plate of the rechargeable battery is bonded to a case according to the exemplary embodiment.

Referring to FIG. 3, when the rechargeable battery 1000 is assembled, the second electrode tab 150 of the electrode assembly 100 accommodated in the case 200 is coupled to the peripheral portion 412 of the flange part 410 of the terminal plate 400 by using a welding method, such as ultrasonic welding, and the cap plate 300 to which the terminal plate 400 is insulation-bonded is coupled to the opening portion 210 of the case 200. In this case, the second electrode tab 150 extended from the border of the upper portion of the electrode assembly 100 is coupled to the peripheral portion 412 of the flange part 410 of the terminal plate 400, so that the occurrence of the bending in the second electrode tab 150 is suppressed in the process of coupling the cap plate 300 to which the terminal plate 400 is insulation-bonded to the opening portion 210 of the case 200 because the length of the second electrode tab 150 itself is small.

As described above, in the rechargeable battery 1000 according to the exemplary embodiment, the second electrode tab 150 of the electrode assembly 100 is coupled to the peripheral portion 412 of the flange part 410 of the terminal plate 400, so that the length of the second electrode tab 150 itself is small and thus the occurrence of the bending in the second electrode tab 150 is suppressed.

That is, the rechargeable battery 1000 in which the occurrence of the bending in the second electrode tab 150 connected with the terminal plate 400 that is the second electrode terminal is suppressed is provided.

Further, in the rechargeable battery 1000 according to the exemplary embodiment, the thickness of the flange part 410 is smaller than the thickness of the protruding part 420, so that the space between the flange part 410 and the second electrode tab 150 is ultrasonic-welded.

That is, the rechargeable battery 1000 in which the space between the terminal plate 400 that is the second terminal and the second electrode tab 150 is ultrasonic-welded is provided.

Further, in the rechargeable battery 1000 according to the exemplary embodiment, the flange part 410 of the terminal plate 400 that is the second electrode terminal is connected with the second electrode tab 150 of the electrode assembly 100 between the cap plate 300 that is the first electrode terminal and the electrode assembly 100, and the thermal fusion layer 500 insulation-bonds the space between the cap plate 300 and the flange part 410 of the terminal plate 400, so that the terminal plate 400 is suppressed from being separated from the cap plate 300 by external impact and the second electrode tab 150 is blocked from being in contact with the cap plate 300, thereby preventing a short circuit between the terminal plate 400 that is the second electrode terminal and the cap plate 300 and the case 200 that are the first electrode terminals.

In particular, in the rechargeable battery 1000 according to the exemplary embodiment, the flange part 410 of the terminal plate 400 that is the second electrode terminal overlapping the cap plate 300 that is the first electrode terminal has the larger area than that of the protruding part 420 and is located between the second electrode tab 150 of the electrode assembly 100 and the cap plate 300 to be insulation-bonded to the cap plate 300 by the thermal fusion layer 500, so that the terminal plate 400 is suppressed from being separated from the cap plate 300 even though external impact is generated, and simultaneously, the flange part 410 prevents a short-circuit between the second electrode tab 150 and the cap plate 300.

Further, in the rechargeable battery 1000 according to the exemplary embodiment, the external surface of the protruding part 420 of the terminal plate 400 that is the second electrode terminal passing through the through-hole 310 of the cap plate 300 that is the first electrode terminal is located lower than the external surface of the cap plate 300 that is the first electrode terminal, so that even though an external conductive foreign substance is in contact with the rechargeable battery 1000, a short circuit between the protruding part 420 that is the second electrode terminal and the cap plate 300 and the case 200 that are the first electrode terminals is prevented.

That is, there is provided the rechargeable battery 1000 in which a short circuit between the electrode terminals is prevented.

Although an exemplary embodiment of the present invention has been described in detail, the scope of the present invention is not limited by the embodiment. Various changes and modifications using the basic concept of the present invention defined in the accompanying claims by those skilled in the art shall be construed to belong to the scope of the present invention.

### <Description of symbols>

Electrode assembly 100, First electrode tab 140, Second electrode tab 150, Case 200, Cap plate 300, Terminal plate 400, Flange part 410, Protruding part 420

## Claims

1. A rechargeable battery, comprising:
an electrode assembly including a first electrode, a second electrode, a separator located between the first electrode and the second electrode, a first electrode tab extended from the first electrode, and a second electrode tab extended from the second electrode;
a case connected to the first electrode tab to accommodate the electrode assembly, and including an opening portion to expose the electrode assembly;
a cap plate coupled with the case to cover an outer peripheral region of the opening portion and including a through-hole to expose a center region of the opening portion; and
a terminal plate connected to the second electrode tab to be insulation-bonded to the cap plate, and including a flange part covering the through-hole and a protruding part passing through the through-hole from a center portion of the flange part,
wherein the second electrode tab is coupled with a peripheral portion of the flange part.

2. The rechargeable battery of claim 1, wherein:
the second electrode tab does not overlap the protruding part.

3. The rechargeable battery of claim 2, wherein:
the second electrode tab is extended from a border of an upper portion of the electrode assembly to the flange part.

4. The rechargeable battery of claim 3, wherein:
the flange part is located between the cap plate and the electrode assembly.

5. The rechargeable battery of claim 4, wherein:
the protruding part passes through the through-hole and is exposed to the outside.

6. The rechargeable battery of claim 4, wherein:
the flange part has a wider area than an area of the protruding part.

7. The rechargeable battery of claim 1, wherein:
a thickness of the flange part is smaller than a thickness of the protruding part.

8. The rechargeable battery of claim 7, wherein:
the second electrode tab is welded to the flange part by ultrasonic welding.

9. The rechargeable battery of claim 1, further comprising:
a thermal fusion layer located between the cap plate and the flange part and configured to insulation-bond the cap plate and the flange part.

10. The rechargeable battery of claim 9, wherein:
the second electrode tab overlaps the thermal fusion layer.

11. The rechargeable battery of claim 1, wherein:
the case and the cap plate have the same polarity as a polarity of the first electrode, and
the terminal plate has the same polarity as a polarity of the second electrode.

12. The rechargeable battery of claim 1, wherein:
the first electrode tab is coupled to a bottom portion of the case.

13. The rechargeable battery of claim 12, wherein:
the first electrode tab is extended from a border of a lower portion of the electrode assembly to a bottom portion of the case.
